# EUROPEAN PATENT APPLICATION

(11) **EP 4 663 816 A1**
(43) Date of publication of application: **17.12.2025**
(21) Application number: 24753376.3
(22) Date of filing: 07.02.2024
(51) Int. Cl.: C25D 5/26, C21D 9/46, C22C 19/03, C22C 38/00, C22C 38/16, C23C 8/16, C25D 5/50

(54) **SURFACE-TREATED STEEL SHEET AND METHOD FOR MANUFACTURING SURFACE-TREATED STEEL SHEET**

(30) Priority: 07.02.2023 JP 2023016703
(71) Applicant: NIPPON STEEL CORPORATION, Chiyoda-ku Tokyo 100-8071 (JP)
(72) Inventor: GOTO, Yasuto, Tokyo 100-8071 (JP); KAWAMOTO, Kosuke, Tokyo 100-8071 (JP)
(74) Representative: Vossius & Partner Patentanwälte Rechtsanwälte mbB
(86) International application number: PCT/JP2024/004072
(87) International publication number: WO 2024/166933

(57) **Abstract**

A surface-treated steel sheet according to one aspect of the present invention is a surface-treated steel sheet including: a base steel sheet; a Ni-containing layer disposed on a surface of the base steel sheet; and a Ni-W alloy layer disposed on a surface of the Ni-containing layer, wherein the Ni-containing layer includes an Fe-diffused alloy layer, and the surface-treated steel sheet includes a W depletion layer in a range from a surface of the Ni-W alloy layer to a depth of 10 nm. In a method for manufacturing a surface-treated steel sheet according to another aspect of the present invention, an atmospheric dew point in annealing is set to -25 to 5°C, a soaking time in the annealing is set to 10 to 180 seconds, and a maximum temperature in the annealing is set to 630 to 860°C.

## Description

### TECHNICAL FIELD

The present invention relates to a surface-treated steel sheet and a method for manufacturing a surface-treated steel sheet.

Priority is claimed on Japanese Patent Application No. 2023-016703, filed February 7, 2023, the content of which is incorporated herein by reference.

### BACKGROUND ART

Conventionally, Ni-plated steel sheets have been used as surface-treated steel sheets for battery cans. Ni-plated steel sheets are used for various battery containers such as battery cans of alkaline manganese dry batteries, lithium ion batteries, and nickel hydrogen batteries because of their excellent chemical stability of Ni.

In recent years, Ni-W alloy plated steel sheets including an alloy of Ni and W as a main component have also started to be used as a material of a battery can or the like. An example of a Ni-W alloy plated steel sheet is the steel sheets described in Patent Documents 1 to 4.

Patent Document 1 discloses a plated steel sheet for a battery container characterized in that an iron-nickel alloy layer, a nickel layer, and a nickel-tungsten alloy layer are formed in this order from the bottom on a steel sheet on a side to be an inner surface of the battery container of the steel sheet.

Patent Document 2 discloses a Ni-containing surface-treated steel sheet for a container molded by press molding, including a steel sheet having a first surface that becomes an outer side of the container after the press molding, a Ni-containing layer disposed on the first surface of the steel sheet, and a Ni-W alloy plating layer disposed on the Ni-containing layer. In the disclosed surface-treated steel sheet, the Ni-containing layer includes an Fe-Ni-diffused alloy layer, and the amount of Ni included in the Ni-containing layer is 5 g/m² or more and 89 g/m² or less; the Ni-W alloy plating layer has a thickness of 0.02 µm or more and 2 µm or less; and a W concentration in the Ni-W alloy plating layer is 10% or more and 65% or less by mass%.

Patent Document 3 discloses a steel sheet for a non-aqueous electrolytic solution secondary battery case including a steel sheet and a Ni-W-Fe alloy plating layer formed on a surface of the steel sheet, containing a Ni-W-Fe alloy, and serving as an inner surface of the non-aqueous electrolytic solution secondary battery case.

Patent Document 4 discloses a steel sheet for an alkaline battery can used for a battery can of an inside-out type alkaline battery, characterized by including a plating layer selected from nickel-tungsten (Ni-W) and a nickel-cobalt-tungsten (Ni-Co-W) alloy on a surface layer of one main surface of a substrate made of a plate-shaped steel material, in which the plating layer has irregularities formed by elution of the tungsten on the surface.

### Citation List

### Patent Document

Patent Document 1: Japanese Unexamined Patent Application, First Publication No. 2007-51325
Patent Document 2: PCT International Publication No. WO 2012/137823
Patent Document 3: PCT International Publication No. WO 2017/006834
Patent Document 4: Japanese Unexamined Patent Application, First Publication No. 2020-155202

### SUMMARY OF INVENTION

### Technical Problem

In recent years, there has been an increasing need for battery cans having a rectangular shape. A rectangular can type battery can is used at a neutral potential. Therefore, a surface-treated steel sheet for a rectangular can is required to have high metal elution resistance to an electrolytic solution. The Ni-W alloy plated steel sheet is superior in metal elution resistance to a Ni-plated steel sheet conventionally and often used as a battery can. Therefore, a Ni-W alloy plated steel sheet is regarded as a promising material for battery cans.

However, Ni-W alloy plating is harder than Ni plating and has low workability. When the Ni-W alloy plated steel sheet is used as the material of the rectangular can, cracks are likely to occur in the Ni-W alloy plating at a bent portion. Cracks refer to cracks extending from the surface of the plating layer to the base metal. Cracks expose the base metal to the outside of the plating and promote corrosion of the base metal. Since the Ni-W alloy plating does not have a sacrificial protection effect, the Ni-W alloy plated steel sheet is likely to corrode starting from a crack in the plating.

For the above reasons, a Ni-W alloy plated steel sheet having high workability is desired, but it is very difficult to meet this demand.

Patent Document 1 has an object of suppressing contact resistance and improving discharge characteristics, but no particular study has been made on the workability of the plated steel sheet.

Patent Document 2 has an object of improving corrosion resistance after press molding, and proposes, as a solution thereof, forming an Fe-Ni-diffused alloy layer by heating an interface between the steel plate and the Ni plated layer, and applying hard Ni-W alloy plating to an outermost surface. In the plating described in Patent Document 2, a soft Fe-Ni-diffused alloy layer is used to prevent cracks generated in the Ni-W alloy plating layer from propagating to the base steel sheet. However, in the plating described in Patent Document 2, there is room for improvement in preventing the occurrence of cracks in the Ni-W alloy plating layer.

The plated steel sheet disclosed in Patent Document 3 also has a relatively soft Ni plated layer compared with the Ni-W-Fe alloy plating layer below the Ni-W-Fe alloy plating layer. However, in the plating described in Patent Document 3, there is also room for improvement in preventing the occurrence of cracks in the Ni-W alloy plating layer.

Patent Document 4 has an object of improving high load discharge performance and long-term storage performance of the steel sheet, but does not particularly study the workability of the plated steel sheet.

In view of the above circumstances, an object of the present invention is to provide a Ni-W alloy-based surface-treated steel sheet having excellent workability, and a method for manufacturing the same.

### Solution to Problem

The gist of the present invention is as described below.
(1) A surface-treated steel sheet according to one aspect of the present invention includes: a base steel sheet; a Ni-containing layer disposed on a surface of the base steel sheet; and a Ni-W alloy layer disposed on a surface of the Ni-containing layer, wherein the Ni-containing layer includes an Fe-diffused alloy layer, the Ni-W alloy layer has a thickness of more than 10 nm, and the surface-treated steel sheet includes a W depletion layer in a range from a surface of the Ni-W alloy layer to a depth of 10 nm.
(2) Preferably, in the surface-treated steel sheet according to (1), the surface-treated steel sheet has a W concentration bottom in the range from the surface of the Ni-W alloy layer to a depth of 10 nm, the surface-treated steel sheet has a W concentration peak in a place deeper than the W concentration bottom, and a proportion W_{E}/W_{P} of a W concentration W_{B} at the W concentration bottom to a W concentration W_{P} at the W concentration peak is 0.5 or less.
(3) Preferably, in the surface-treated steel sheet according to (1) or (2), the Fe-diffused alloy layer is disposed only in the Ni-containing layer or disposed in the entire Ni-containing layer and only part of the Ni-W alloy layer, the surface-treated steel sheet has a Ni concentration peak in the range from the surface of the Ni-W alloy layer to a depth of 10 nm, the surface-treated steel sheet has a Ni concentration bottom in a place deeper than the Ni concentration peak in the Ni-W alloy layer, and a proportion Ni_{P}/Ni_{B} of a Ni concentration Ni_{P} at the Ni concentration peak to a Ni concentration Ni_{B} at the Ni concentration bottom is 1.1 or more.
(4) Preferably, in the surface-treated steel sheet according to any one of (1) to (3), the Ni-containing layer has a thickness of 0.2 to 4.0 µm.
(5) Preferably, in the surface-treated steel sheet according to any one of (1) to (4), an attached amount of Ni included in the Ni-containing layer and the Ni-W alloy layer is 1.8 to 35.6 g/m².
(6) Preferably, in the surface-treated steel sheet according to any one of (1) to (5), the Fe-diffused alloy layer has a thickness of 0.1 to 3.0 µm.
(7) Preferably, in the surface-treated steel sheet according to any one of (1) to (6), an average W concentration in the Ni-W alloy layer is 10 to 45 mass%.
(8) Preferably, in the surface-treated steel sheet according to any one of (2) to (7), the proportion W_{B}/W_{P} of the W concentration W_{B} at the W concentration bottom to the W concentration W_{P} at the W concentration peak is 0.05 or more.
(9) Preferably, in the surface-treated steel sheet according to any one of (1) to (8), only part of the Ni-containing layer is the Fe-diffused alloy layer.
(10) Preferably, in the surface-treated steel sheet according to any one of (1) to (9), the Ni-containing layer is entirely the Fe-diffused alloy layer, and part of the Ni-W alloy layer is the Fe-diffused alloy layer.
(11) A method for manufacturing a surface-treated steel sheet according to another aspect of the present invention includes: electro-Ni plating a base steel sheet; electro-Ni-W alloy plating the base steel sheet including an Ni plated layer; and annealing the base steel sheet including the Ni plated layer and an Ni-W alloy layer disposed thereon, wherein an atmospheric dew point in the annealing is set to -25 to 5°C, a soaking time in the annealing is set to 10 to 180 seconds, and a maximum temperature in the annealing is set to 630 to 860°C.
(12) Preferably, in the method for manufacturing the surface-treated steel sheet according to (11), in the electro-Ni plating, an Ni attached amount is set to 1.5 to 33 g/m².
(13) Preferably, in the method for manufacturing the surface-treated steel sheet according to (11) or (12), in the electro-Ni plating and the electro-Ni-W alloy plating, a total Ni attached amount is set to 1.8 to 35.6 g/m².

### Advantageous Effects of Invention

According to the present invention, it is possible to provide a Ni-W alloy-based surface-treated steel sheet having excellent workability, and a method for manufacturing the same.

### BRIEF DESCRIPTION OF DRAWINGS

[FIG. 1] FIG. 1 is a schematic cross-sectional view of an example (partial diffusion) of a surface-treated steel sheet according to the present embodiment.
[FIG. 2] FIG. 2 is a schematic cross-sectional view of another example (partial diffusion) of a surface-treated steel sheet according to the present embodiment.
[FIG. 3] FIG. 3 is a schematic cross-sectional view of another example (entire diffusion) of a surface-treated steel sheet according to the present embodiment.
[FIG. 4] FIG. 4 is a schematic diagram of a W concentration curve of a Ni-W alloy layer in an example of a surface-treated steel sheet according to the present embodiment.
[FIG. 5] FIG. 5 is a schematic diagram of a Ni concentration curve of a Ni-W alloy layer in an example of a surface-treated steel sheet according to the present embodiment.
[FIG. 6] FIG. 6 is a flowchart describing an example of a method for manufacturing a surface-treated steel sheet according to the present embodiment.
[FIG. 7] FIG. 7 is a cross-sectional view of a die used in a draw bead test.

### DESCRIPTION OF EMBODIMENTS

### (1. Surface-Treated Steel Sheet 1)

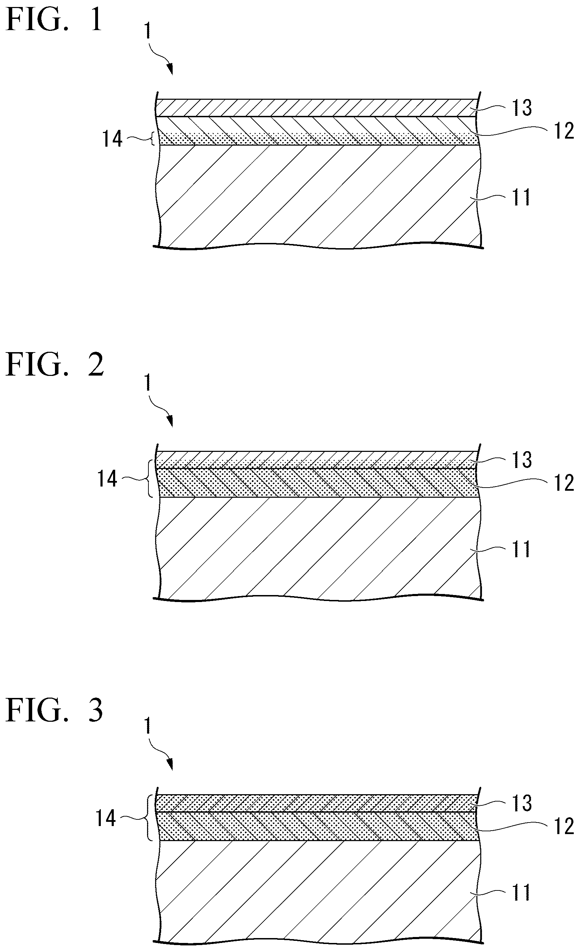

As illustrated in FIG. 1 and the like, a surface-treated steel sheet 1 according to one aspect of the present invention includes a base steel sheet 11, a Ni-containing layer 12 disposed on a surface of the base steel sheet 11, and a Ni-W alloy layer 13 disposed on a surface of the Ni-containing layer 12, in which the Ni-containing layer 12 includes an Fe-diffused alloy layer 14, the Ni-W alloy layer 13 has a thickness of more than 10 nm, and the surface-treated steel sheet 1 includes a W depletion layer 131 in a range from the surface of the Ni-W alloy layer 13 to a depth of 10 nm. Hereinafter, the surface-treated steel sheet 1 according to the present embodiment will be described in detail. The entire plating layer including the Ni-containing layer 12 and the Ni-W alloy layer 13 may be simply referred to as a "plating layer".

### (Base Steel Sheet 11)

The surface-treated steel sheet 1 includes the base steel sheet 11. The base steel sheet 11 is a steel sheet serving as a substrate of the surface-treated steel sheet 1. The components, the sheet thickness, the metallographic structure, and the like of the base steel sheet 11 are not particularly limited, and can be appropriately selected according to the application of the surface-treated steel sheet 1.

### (Ni-Containing Layer 12)

The surface-treated steel sheet 1 includes the Ni-containing layer 12 disposed on the surface of the base steel sheet 11. The Ni-containing layer 12 contains Ni and is provided on the surface of the base steel sheet 11. The Ni-containing layer 12 may be provided only on one surface of the base steel sheet 11 or may be provided on both surfaces.

### (Ni-W Alloy Layer 13)

The surface-treated steel sheet 1 further includes the Ni-W alloy layer 13 disposed on the surface of the Ni-containing layer 12. The Ni-W alloy layer 13 is an alloy plating layer containing Ni as a main component and further containing W. The Ni-W alloy plating is harder than Ni. By analyzing the component distribution of the plating layer using glow discharge optical emission spectrometry, which is an analysis method capable of measuring the depth direction distribution of chemical composition from the surface of the plating layer, the Ni-W alloy layer 13 having a high W concentration and the Ni-containing layer 12 having a low W concentration can be distinguished.

The thickness of the Ni-W alloy layer 13 is at least more than 10 nm. The thickness of the Ni-W alloy layer 13 is more preferably 20 nm or more, 50 nm or more, 80 nm or more, 100 nm or more, or 150 nm or more. The upper limit of the thickness of the Ni-W alloy layer 13 is not particularly limited, but is, for example, 350 nm or less, 320 nm or less, or 300 nm or less. For example, when the surface-treated steel sheet 1 is a battery can, the thickness of the Ni-W alloy layer on the outer surface of the battery can is preferably in a range of 100 nm to 300 nm. The thickness of the Ni-W alloy layer on the inner surface of the battery can is preferably in a range of 20 nm to 40 nm.

The Ni-W alloy layer 13 may be provided only on one surface of the base steel sheet 11 or may be provided on both surfaces. A surface treatment layer such as a coating film may be further provided on the surface of the Ni-W alloy layer 13.

### (Fe-diffused Alloy Layer 14)

At least part of the Ni-containing layer 12 is the Fe-diffused alloy layer 14. That is, the Ni-containing layer 12 includes the Fe-diffused alloy layer 14. The Fe-diffused alloy layer 14 is an alloy layer formed by diffusing Fe of the base steel sheet 11 into the plating layer. The Fe-diffused alloy layer 14 is obtained, for example, by plating the surface of the base steel sheet 11 and then performing an alloying treatment such as annealing.

In the schematic cross-sectional view illustrated in FIG. 1, only part of the Ni-containing layer 12 is the Fe-diffused alloy layer 14 in contact with the base steel sheet 11. On the other hand, as illustrated in FIGS. 2 and 3, the Ni-containing layer 12 may be entirely the Fe-diffused alloy layer 14. As illustrated in FIGS. 2 and 3, the Fe-diffused alloy layer 14 may extend to the Ni-W alloy layer 13. That is, the Ni-W alloy layer 13 may include the Fe-diffused alloy layer 14. As illustrated in FIG. 2, only part of the Ni-W alloy layer 13 may be the Fe-diffused alloy layer 14, or as illustrated in FIG. 3, the Ni-W alloy layer 13 may be entirely the Fe-diffused alloy layer 14. As illustrated in FIG. 3, a plating layer in which the Ni-containing layer 12 and the Ni-W alloy layer 13 are entirely the Fe-diffused alloy layer 14 may be referred to as an entire diffusion plating layer. On the other hand, as illustrated in FIG. 1 or 2, a plating layer in which part of the Ni-containing layer 12 and the Ni-W alloy layer 13 is the Fe-diffused alloy layer 14 may be referred to as a partial diffusion plating layer. The Fe-diffused alloy layer 14 formed in the Ni-containing layer 12 may be referred to as a Ni-Fe alloy layer, and the Fe-diffused alloy layer 14 formed in the Ni-W alloy layer 13 may be referred to as a Ni-W-Fe alloy layer. In general, a surface-treated steel sheet in which only part of the Ni-containing layer 12 is the Fe-diffused alloy layer 14 and a surface-treated steel sheet in which the Ni-containing layer 12 is entirely the Fe-diffused alloy layer 14 and only part of the Ni-W alloy layer 13 is the Fe-diffused alloy layer 14 are referred to as partial diffusion plated steel sheets. A surface-treated steel sheet in which the Ni-containing layer 12 and the Ni-W alloy layer 13 are entirely the Fe-diffused alloy layer 14 is referred to as an entire diffusion plated steel sheet.

### (W Depletion Layer 131 of Ni-W Alloy Layer 13)

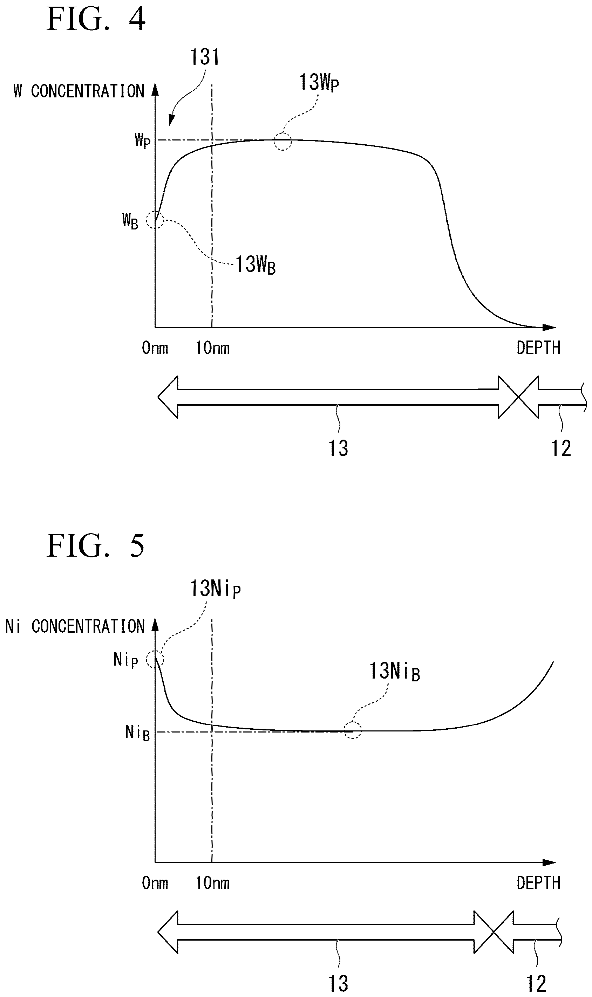

As illustrated in the schematic diagram of FIG. 4, the surface-treated steel sheet 1 according to the present embodiment includes a W depletion layer 131 in a range from the surface of the Ni-W alloy layer 13 to a depth of 10 nm. The surface of the Ni-W alloy layer 13 does not mean the interface between the Ni-W alloy layer 13 and the Ni-containing layer 12 but the surface of the Ni-W alloy layer 13 on the side opposite to the Ni-containing layer 12. The W concentration of the W depletion layer 131 is smaller than the W concentration in a region of the Ni-W alloy layer 13 at a depth of more than 10 nm from the surface of the Ni-W alloy layer 13.

According to Fick's laws, a concentration gradient of an element causes diffusion of the element. The diffusion rate of the element is proportional to the concentration gradient. In the stage before the alloying treatment, the W concentration of the Ni-W alloy layer 13 is high, and on the other hand, the W concentration of the Ni-containing layer 12 is substantially 0 mass%. When the alloying treatment is performed on multilayer plating in which the Ni-containing layer 12 and the Ni-W alloy layer 13 are stacked, it is expected that W atoms are diffused from the Ni-W alloy layer 13 to the Ni-containing layer 12. Accordingly, in the plating layer after the normal alloying treatment, W is expected to monotonically decrease from the Ni-W alloy layer 13 toward the Ni-containing layer 12. However, in the surface-treated steel sheet 1 according to the present embodiment, a phenomenon contrary to this occurs. The Ni-W alloy layer 13 of the surface-treated steel sheet 1 according to the present embodiment includes the W depletion layer 131 having a low W concentration in the vicinity of the surface on the side opposite the Ni-containing layer 12. The W depletion layer 131 can be formed, for example, by appropriately controlling the atmospheric dew point at the time of annealing for the alloying treatment. When the present inventors analyzed various surface-treated steel sheets, W hardly diffused from the Ni-W alloy layer 13 to the Ni-containing layer 12.

### (Operation and Effects)

The surface-treated steel sheet 1 according to the present embodiment includes the Ni-W alloy layer 13. W has a function of enhancing metal elution resistance of the Ni plated layer with respect to the electrolytic solution. However, W hardens the Ni plated layer and impairs the workability thereof. A plating layer having low workability is likely to develop cracks during press molding or the like. The cracks extend from the surface of the plating layer to the base metal. The cracks expose the base metal to the outside of the plating and promote corrosion of the base metal. Since the Ni plating and the Ni-W alloy plating do not have a sacrificial protection effect, the Ni-plated steel sheet and Ni-W alloy plated steel sheet are likely to corrode starting from a crack in the plating.

The present inventors provided the Ni-containing layer 12 between the Ni-W alloy layer 13 and the base steel sheet 11 in order to improve the workability of the plating layer. Further, at least part of the Ni-containing layer 12 was alloyed. The Ni-containing layer 12 and the Fe-diffused alloy layer 14 prevent cracks from growing to the base steel sheet 11, and eventually prevent the base steel sheet 11 from being exposed to a corrosive environment.

However, the Ni-containing layer 12 and the Fe-diffused alloy layer 14 relax the adverse effect of cracks, but do not suppress the occurrence of cracks on the surface of the plating layer. The present inventors considered it necessary to suppress the occurrence of cracks in the Ni-W alloy layer 13, and studied a method to achieve this. The present inventors found that the occurrence of cracks can be suppressed by disposing the W depletion layer 131 in the vicinity of the surface of the Ni-W alloy layer 13.

In general, the hardness of the Ni-W alloy layer 13 increases in proportion to the W concentration. In the W depletion layer 131, the hardness of the Ni-W alloy layer 13 is estimated to be reduced. The vicinity of the surface of the Ni-W alloy layer 13 serves as a crack generation starting point when the surface-treated steel sheet 1 is bent. The present inventors estimate that the W depletion layer 131 reduces the hardness in the vicinity of the surface of the Ni-W alloy layer 13 to suppress the occurrence of cracks.

As described above, in the surface-treated steel sheet 1 according to the present embodiment, the Ni-containing layer 12 and the Fe-diffused alloy layer 14 are used to prevent the growth of cracks to the base steel sheet 11. In the surface-treated steel sheet 1 according to the present embodiment, the occurrence of cracks is suppressed using the W depletion layer 131. Accordingly, the surface-treated steel sheet 1 according to the present embodiment has excellent workability despite including the Ni-W alloy layer 13, which is hard and easily cracked.

According to the experimental results of the present inventors, the depth at which the W depletion layer 131 was formed was within a range from the surface of the plating layer to a depth of 10 nm. If the thickness of the Ni-W alloy layer is 10 nm or less, the W depletion layer 131 is not formed inside the Ni-W alloy layer. Accordingly, the thickness of the Ni-W alloy layer needs to be more than 10 nm.

The most basic aspect of the surface-treated steel sheet 1 according to the present embodiment has been described above. Next, a more preferable aspect of the surface-treated steel sheet 1 according to the present embodiment will be described.

### (Proportion of W Concentration W_{B} at W Concentration Bottom to W Concentration W_{P} at W Concentration Peak)

As described below, a W concentration curve as illustrated in FIG. 4 can be obtained by continuously analyzing the W concentration of the Ni-W alloy layer 13 from the surface of the Ni-W alloy layer 13 along the depth direction using XPS. **In** this W concentration curve, when there is a bottom of the W concentration in a region from the surface of the Ni-W alloy layer 13 to a depth of 10 nm, it is considered that there is the W depletion layer 131. The magnitude of the bottom in the W concentration curve, that is, the W concentration W_{B} at the W concentration bottom is not particularly limited, but may be, for example, more than 0 mass%.

The magnitude of the bottom in the W concentration curve may be limited by using a proportion W_{B}/W_{P} of the W concentration W_{B} at the W concentration bottom to the W concentration W_{P} at the W concentration peak. A W concentration peak 13W_{P} is where the W concentration is maximized in the W concentration curve of the Ni-W alloy layer 13, and W_{P} is the W concentration at the W concentration peak. In other words, W_{P} is the absolute maximum value of the W concentration in the W concentration curve of the Ni-W alloy layer 13. A W concentration bottom 13W_{B} is where the W concentration is minimized in a range from the surface to a depth of 10 nm in the W concentration curve of the Ni-W alloy layer 13, and W_{B} is the W concentration at the W concentration bottom. In other words, W_{B} is the absolute minimum value of the W concentration in a range from the surface to a depth of 10 nm in the W concentration curve of the Ni-W alloy layer 13. However, when the W concentration is substantially constant within a range from the surface to a depth of 10 nm, or when the W concentration monotonously decreases from the surface of the Ni-W alloy layer 13 toward the inside within the range, it is considered that there is no W concentration bottom 13W_{B}.

In the surface-treated steel sheet 1 according to the present embodiment, the proportion W_{B}/W_{P} of the W concentration W_{B} at the W concentration bottom to the W concentration W_{P} at the W concentration peak is preferably 0.5 or less. As a result, the occurrence of cracks on the surface of the Ni-W alloy layer 13 can be further suppressed. W_{B}/W_{P} is more preferably 0.4 or less, 0.3 or less, or 0.2 or less.

On the other hand, W_{B}/W_{P} may be 0.05 or more, 0.07 or more, 0.1 or more, or 0.15 or more. This is because the metal elution resistance of the surface-treated steel sheet 1 is further improved by increasing W_{B}/W_{P}. For example, when the surface-treated steel sheet 1 is used as a material of a battery can, the electrolytic solution resistance of the battery can is further improved by setting W_{B}/W_{P} to 0.05 or more on the surface of the inside of the battery can.

### (Ni Concentration Peak 13Nip)

As described above, the plating layer of the surface-treated steel sheet 1 according to the present embodiment may be the partial diffusion plating layer illustrated in FIGS. 1 and 2 or the entire diffusion plating layer illustrated in FIG. 3. The present inventors found that when the plating layer of the surface-treated steel sheet 1 is a partial diffusion plating layer, as illustrated in FIG. 5, a Ni concentration peak 13Ni_{P} can be arranged in the vicinity of the surface of the Ni-W alloy layer 13.

That is, in the surface-treated steel sheet 1 according to the present embodiment, when the Fe-diffused alloy layer 14 is disposed only in the Ni-containing layer 12 as illustrated in FIG. 1 or disposed in the entire Ni-containing layer 12 and only part of the Ni-W alloy layer 13 as illustrated in FIG. 2, it is preferable that the surface-treated steel sheet 1 have a Ni concentration peak 13Ni_{P} in a range from the surface of the Ni-W alloy layer 13 to a depth of 10 nm, the surface-treated steel sheet 1 have a Ni concentration bottom 13Ni_{B} in a place deeper than the Ni concentration peak 13Nip in the Ni-W alloy layer 13, and a proportion Ni_{P}/Ni_{B} of a Ni concentration Ni_{P} at the Ni concentration peak to a Ni concentration Ni_{B} at the Ni concentration bottom be 1.1 or more.

The Ni concentration peak 13Ni_{P} is where the Ni concentration is maximized in a range from the surface to a depth of 10 nm in the Ni concentration curve of the Ni-W alloy layer 13, and Ni_{P} is the Ni concentration at the Ni concentration peak. In other words, Ni_{P} is the absolute maximum value of the Ni concentration in a range from the surface to a depth of 10 nm in the Ni concentration curve of the Ni-W alloy layer 13. However, when the Ni concentration is substantially constant within a range from the surface to a depth of 10 nm, or when the Ni concentration monotonously increases from the surface of the Ni-W alloy layer 13 toward the inside within the range, it is considered that there is no Ni concentration peak 13Nip. The Ni concentration bottom 13Ni_{B} is where the Ni concentration is minimized in the Ni concentration curve of the Ni-W alloy layer 13, and Ni_{B} is the Ni concentration at the Ni concentration bottom. In other words, Ni_{B} is the absolute minimum value of the Ni concentration in the Ni concentration curve of the Ni-W alloy layer 13.

Considering the diffusion law, like the W depletion layer 131, the generation of the Ni concentration peak 13Ni_{P} is also a peculiar phenomenon. In the stage before the alloying treatment, the Ni concentration of the Ni-W alloy layer 13 is smaller than the Ni concentration of the Ni-containing layer 12. When the alloying treatment is performed on multilayer plating in which the Ni-containing layer 12 and the Ni-W alloy layer 13 are stacked, Ni atoms are diffused from the Ni-containing layer 12 to the Ni-W alloy layer 13. Accordingly, in the plating layer after the normal alloying treatment, Ni is expected to monotonically decrease from the Ni-containing layer 12 toward the Ni-W alloy layer 13. However, in the surface-treated steel sheet 1 according to the present embodiment, a phenomenon contrary to this expectation may occurs. The Ni-W alloy layer 13 of the surface-treated steel sheet 1 according to the present embodiment may have a Ni concentration peak having a high Ni concentration in the vicinity of the surface on the side opposite the Ni-containing layer 12. According to findings by the present inventors, the Ni concentration peak can be formed, for example, by appropriately controlling the atmospheric dew point and using the plating layer as a partial diffusion layer at the time of annealing for the alloying treatment.

In the surface-treated steel sheet 1 according to the present embodiment, the proportion Ni_{P}/Ni_{B} of the Ni concentration Ni_{P} at the Ni concentration peak to the Ni concentration Ni_{B} at the Ni concentration bottom is preferably 1.1 or more. The higher the Ni concentration, the lower the hardness of the Ni-W alloy layer 13. Accordingly, by setting Ni_{P}/Ni_{B} to 1.1 or more, the occurrence of cracks on the surface of the Ni-W alloy layer 13 can be further suppressed. Ni_{P}/Ni_{B} is more preferably 1.15 or more or 1.2 or more. Ni_{P}/Ni_{B} is preferably as large as possible, and the upper limit thereof is not necessarily limited, but for example, Ni_{P}/Ni_{B} may be 1.4 or less, 1.35 or less, or 1.3 or less.

### (Thickness of Ni-Containing Layer 12)

The thickness of the Ni-containing layer 12 is not particularly limited. Even with a small thickness, the Ni-containing layer 12 exhibits an effect of suppressing the growth of cracks. On the other hand, from the viewpoint of further enhancing the workability of the surface-treated steel sheet 1, it is advantageous that the thickness of the Ni-containing layer 12 is large. Accordingly, the thickness of the Ni-containing layer 12 may be, for example, 0.2 µm or more. This further enhances the workability of the surface-treated steel sheet 1. The thickness of the Ni-containing layer 12 may be 0.7 µm or more, 1.0 µm or more, or 1.5 µm or more. The upper limit of the thickness of the Ni-containing layer 12 is not particularly defined. For example, the Ni-containing layer 12 may be 4.0 µm or less, 3.0 µm or less, or 2.0 µm or less.

### (Attached amount of Ni)

The attached amount of Ni included in the plating layer (that is, the Ni-containing layer 12 and the Ni-W alloy layer 13) is not particularly limited, but may be, for example, within a range of 1.8 to 35.6 g/m². By setting the attached amount of Ni to 1.8 g/m² or more, the corrosion resistance after working of the surface-treated steel sheet 1 is further enhanced. By setting the attached amount of Ni to 35.6 g/m² or less, the manufacturing cost of the surface-treated steel sheet 1 can be reduced. The Ni attached amount may be 4.5 g/m² or more, 6.2 g/m² or more, or 8.9 g/m² or more. The Ni attached amount may be 26.7 g/m² or less, 17.8 g/m² or less, or 13.4 g/m² or less.

The thickness (that is, the total thickness of the Ni-containing layer 12 and the Ni-W alloy layer 13) of the plating layer is also not particularly limited. For example, the thickness of the plating layer may be in a range of 0.2 µm to 5.0 µm. The thickness of the plating layer may be 4.0 µm or less.

### (Thickness of Fe-diffused Alloy Layer 14)

The thickness of the Fe-diffused alloy layer 14 is not particularly limited. Even with a small thickness, the Fe-diffused alloy layer 14 can suppress the growth of cracks, enhance the workability of the surface-treated steel sheet 1, and improve the corrosion resistance of the worked portion. On the other hand, the thickness of the Fe-diffused alloy layer 14 may be, for example, 0.1 µm or more. This can further enhance the workability of the surface-treated steel sheet 1. The thickness of the Fe-diffused alloy layer 14 may be 0.5 µm or more, 0.6 µm or more, or 0.7 µm or more. The upper limit of the thickness of the Fe-diffused alloy layer 14 is not particularly defined. For example, the plating layer may be entirely the Fe-diffused alloy layer 14. On the other hand, the Fe-diffused alloy layer 14 may be 3.0 µm or less, 2.0 µm or less, 1.5 µm or less, or 1.0 µm or less.

### (Average W Concentration in Ni-W Alloy Layer 13)

The Ni-W alloy layer 13 contains Ni as a main component and further contains W. "Ni as a main component" means that the Ni concentration is 50 mass% or more. An average W concentration in the Ni-W alloy layer 13 is not particularly limited, but may be, for example, in a range of 10 to 45 mass%.

W increases the metal elution resistance of the Ni-W alloy layer 13. By setting the average W concentration within the above range, the metal elution resistance of the Ni-W alloy layer 13 can be further increased. The average W concentration in the Ni-W alloy layer 13 may be 15 mass% or more, 20 mass% or more, or 30 mass% or more. By reducing the W concentration of the Ni-W alloy layer 13, the workability of the Ni-W alloy layer 13 can be further improved. Accordingly, the average W concentration in the Ni-W alloy layer 13 may be 40 mass% or less, 37 mass% or less, or 35 mass% or less. For example, the Ni-W alloy layer 13 may include Cr, Mo, or the like.

### (Component of Ni-Containing Layer 12)

The Ni-containing layer 12 contains Ni and Fe as main components, in which Fe is diffused from the base steel sheet 11. For example, the total amount of Ni and Fe in the Ni-containing layer 12 may be 98.0 mass% or more, 98.5 mass% or more, or 99.0 mass% or more. The total amount of Ni and Fe in the Ni-containing layer 12 may be 100 mass% or less, 99.5 mass% or less, or 99.0 mass% or less. The proportion of Ni and Fe in the Ni-containing layer 12 is not uniform in the thickness direction of the Ni-containing layer 12 (thickness direction of the surface-treated steel sheet 1). This is because, as described above, part or the entirety of the Ni-containing layer 12 is the Fe-diffused alloy layer 14, and in the Fe-diffused alloy layer 14, the diffusion amount of Fe from the base steel sheet 11 is different in the thickness direction of the Fe-diffused alloy layer 14. In the Fe-diffused alloy layer 14, the Fe content increases as it is closer to the base steel sheet 11. The thickness of the Fe-diffused alloy layer 14 can be appropriately selected.

The Ni-containing layer 12 may include elements other than Ni and Fe. For example, the Ni-containing layer 12 may include Cr, Mo, or the like. For example, the Ni-containing layer 12 may include one or both of Cr and Mo, and the total amount thereof may be more than 0 mass% and 0.1 mass% or less. Various alloying elements included in the base steel sheet 11 may diffuse and enter the Ni-containing layer 12 during the alloying treatment. Accordingly, the Ni-containing layer 12 may include various impurity elements. In addition, W may diffuse from the Ni-W alloy layer 13 and enter the Ni-containing layer 12. However, the W content of the Ni-containing layer 12 is usually less than 1.0%.

### (Component of Ni-W Alloy Layer 13)

As described above, the Ni-W alloy layer 13 contains Ni as a main component and further contains W. As illustrated in FIG. 2, when a part or the entirety of the Ni-W alloy layer 13 is the Fe-diffused alloy layer 14, the Ni-W alloy layer 13 may further contain Fe. When the Ni-W alloy layer 13 does not include the Fe-diffused alloy layer 14, the total amount of Ni and W in the Ni-W alloy layer 13 may be 95.0 mass% or more, 96.0 mass% or more, or 97.0 mass% or more. When the Ni-W alloy layer 13 does not include the Fe-diffused alloy layer 14, the total amount of Ni and W in the Ni-W alloy layer 13 may be 100 mass% or less, 99.0 mass% or less, or 98.0 mass% or less. When the Ni-W alloy layer 13 includes the Fe-diffused alloy layer 14, the total amount of Ni, W, and Fe in the Ni-W alloy layer 13 may be 95.0 mass% or more, 96.0 mass% or more, or 97.0 mass% or more. When the Ni-W alloy layer 13 includes the Fe-diffused alloy layer 14, the total amount of Ni, W, and Fe in the Ni-W alloy layer 13 may be 100 mass% or less, 99.0 mass% or less, or 98.0 mass% or less.

Like the Ni-containing layer 12, the Ni-W alloy layer 13 may include elements other than Ni, W, and Fe. As described above, the Ni-W alloy layer 13 may include, for example, Cr, Mo, or the like. For example, the Ni-W alloy layer 13 may include one or both of Cr and Mo, and the total amount thereof may be more than 0 mass% and 5 mass% or less. The Ni-W alloy layer 13 may include various impurity elements.

### (Type of Base Steel Sheet 11, or the Like)

The components, metallographic structure, and the like of the base steel sheet 11 are not particularly limited. The component and the metallographic structure of the base steel sheet 11 can be appropriately selected according to the application of the surface-treated steel sheet 1. For example, the chemical compositions of the base steel sheet 11 may contain C: 0.0001 to 0.08, Si: 0.001 to 0.03, Mn: 0.01 to 0.4, P: 0.001 to 0.03, and S: 0.000 to 0.03 in unit mass%, and the remainder may include iron and impurities. The base steel sheet 11 may contain elements other than C, Si, Mn, P, and S.

When the surface-treated steel sheet 1 is used as a material of a battery container, for example, the base steel sheet 11 is preferably low carbon aluminum-killed steel, interstitial free steel (IF steel/ultra-low carbon steel), or the like. Specific examples of the chemical composition (unit: mass%) of the base steel sheet 11 are described below.
(Example 1) Low carbon aluminum-killed steel
   Including C: 0.057, Si: 0.004, Mn: 0.29, P: 0.014, S: 0.007, Al: 0.050, Cu: 0.034, and Ni: 0.021, and remainder: including iron and impurities
(Example 2) IF steel
   Including C: 0.004, Si: 0.01, Mn: 0.16, P: 0.013, S: 0.006, Al: 0.029, Cu: 0.027, Ni: 0.022, and Ti: 0.013, and remainder: including iron and impurities
(Example 3) IF steel
   Including C: 0.0012, Si: less than 0.01, Mn: 0.16, P: 0.013, S: 0.006, Al: 0.029, Cu: 0.027, Ni: 0.022, and Ti: 0.020, and remainder: including iron and impurities

The thickness of the base steel sheet 11 is also not particularly limited. When the surface-treated steel sheet 1 is used, for example, as a material of a battery container, the thickness of the base steel sheet 11 is preferably 0.15 to 2.00 mm, for example.

### (Measurement Method)

The presence or absence of the W depletion layer 131 is determined using X-ray photoelectron spectroscopy (XPS). The W concentration curve of the Ni-W alloy layer 13 as illustrated in the schematic diagram of FIG. 4 can be obtained by measuring the distribution of the W concentration of the Ni-W alloy layer 13 from the surface of the Ni-W alloy layer 13 in the depth direction using XPS. When this W concentration curve has a bottom in a range from the surface of the Ni-W alloy layer 13 to a depth of 10 nm, it is determined that the W depletion layer 131 is present.

The proportion W_{B}/W_{P} of the W concentration W_{B} at the W concentration bottom to the W concentration W_{P} at the W concentration peak is also measured based on the W concentration curve of the Ni-W alloy layer 13 obtained by the above-described procedure. The positions of the W concentration bottom 13W_{B} and the W concentration peak 13W_{P} and the W concentrations at the positions can be easily specified based on the shape of the W concentration curve of the Ni-W alloy layer 13.

The proportion Ni_{P}/Ni_{B} of the Ni concentration Ni_{P} at the Ni concentration peak to the Ni concentration Ni_{B} at the Ni concentration bottom is also measured using XPS. The Ni concentration curve of the Ni-W alloy layer 13 as illustrated in the schematic diagram of FIG. 5 can be obtained by measuring the distribution of the Ni concentration of the Ni-W alloy layer 13 from the surface of the Ni-W alloy layer 13 in the depth direction using XPS. The positions of the Ni concentration bottom 13Ni_{B} and the Ni concentration peak 13Ni_{P} and the Ni concentrations at the positions can be easily specified based on the shape of the Ni concentration curve of the Ni-W alloy layer 13.

The XPS measurement conditions are described below. An XPS manufactured by ULVAC-PHI (PHI5600) was used and the X-ray source was MgKα. The analysis area is 800 µmφ. Measurement elements: O and C were simultaneously measured in addition to W, Ni, and Fe. For depth direction analysis, argon was applied for spatter.

The attached amount of Ni is measured by inductively coupled plasma (ICP) optical emission spectrometer (ICP-OES). First, a plating layer having a predetermined area is melted with an acid. Next, the Total-Ni amount included in the solution is quantitatively analyzed by ICP-OES. The Ni attached amount per unit area can be obtained by dividing the Total-Ni amount quantified by ICP-OES by the above-described predetermined area.

The thickness of the Ni-containing layer 12, the thickness of the Ni-W alloy layer 13, and the thickness of the Fe-diffused alloy layer 14 are measured by glow discharge optical emission spectrometry (GDS). The element concentration curve can be obtained by measuring the distribution of the element concentrations of the Ni-containing layer 12 and the Ni-W alloy layer 13 in the depth direction from the surface of the plating layer using GDS.

For the measurement, a high frequency glow discharge emission surface analyzer (manufactured by HORIBA, Ltd., model number: GD-Profiler2) is used. GDS measurement conditions are described below.
Anode diameter: φ 4 mm
Gas: Ar
Gas pressure: 600 Pa
Output: 35 W

In the surface-treated steel sheet 1 according to the present embodiment, a region in which the Fe concentration is 5.0 mass% or more in the plating layer is regarded as the Fe-diffused alloy layer 14. When the component analysis is continuously performed along the depth direction from the surface of the plating layer, the Fe concentration increases as it is closer to the base steel sheet 11. A portion where the Fe concentration is 5.0 mass%, which is specified by continuously performing component analysis along the depth direction from the surface of the plating layer, is regarded as an interface between the Fe-diffused alloy layer 14 and the plating layer that is not the Fe-diffused alloy layer 14.

In the surface-treated steel sheet 1 according to the present embodiment, a region having a Ni concentration of 1.0 mass% or more is regarded as a plating layer, and other regions are regarded as the base steel sheet 11. In the plating layer of the surface-treated steel sheet 1 manufactured by the alloying treatment, the Ni concentration decreases as it is closer to the base steel sheet 11. A portion where the Ni concentration is 1.0 mass%, which is specified by continuously performing component analysis from the surface of the plating layer along the depth direction, is regarded as an interface (that is, the interface between the Fe-diffused alloy layer 14 and the base steel sheet 11) between the plating layer and the base steel sheet 11.

The distance between the interfaces is regarded as the thickness of the Fe-diffused alloy layer 14 in a sample obtained by the above-described procedure. This measurement is performed on five samples, and an average value thereof is calculated. This average value is regarded as the thickness of the Fe-diffused alloy layer 14 of the surface-treated steel sheet 1.

Further, in the surface-treated steel sheet 1 according to the present embodiment, a region where the W concentration is 1.0 mass% or more in the plating layer is regarded as the Ni-W alloy layer 13, and a region where the W concentration is less than 1.0 mass% is regarded as the Ni-containing layer 12. A portion where the W concentration is 1.0 mass%, which is specified by continuously performing component analysis along the depth direction from the surface of the plating layer, is regarded as an interface between the Ni-W alloy layer 13 and the Ni-containing layer 12.

The distance from the interface between the Ni-W alloy layer 13 and the Ni-containing layer 12 to the interface between the plating layer and the base steel sheet 11 is regarded as the thickness of the Ni-containing layer 12 in a sample obtained by the above-described procedure. This measurement is performed on five samples, and an average value thereof is calculated. This average value is regarded as the thickness of the Ni-containing layer 12 of the surface-treated steel sheet 1. The distance from the surface of the plating layer to the interface between the Ni-W alloy layer 13 and the Ni-containing layer 12 is regarded as the thickness of the Ni-W alloy layer 13 in a sample obtained by the above-described procedure. This measurement is performed on five samples, and an average value thereof is calculated. This average value is regarded as the thickness of the Ni-W alloy layer 13 of the surface-treated steel sheet 1.

A method for measuring the average W concentration in the Ni-W alloy layer 13 is as described below. Measurement is performed using X-ray photoelectron spectroscopy (XPS). First, the surface of the surface-treated steel sheet 1 is sputtered using argon and/or xenon. Subsequently, the components of the Ni-W alloy layer 13 are measured from the surface of the Ni-W alloy layer 13 of the surface-treated steel sheet 1 toward the inside. After the measurement is completed, a cycle of performing sputtering again and then measurement is repeated. The analysis result along the depth direction of the W concentration is plotted on a graph in which the horizontal axis is the depth from the surface of the Ni-W alloy layer 13 and the vertical axis is the W concentration. Then, a value obtained by dividing a value obtained by integrating the graph of the W concentration by the width of the section (that is, the thickness of the Ni-W alloy layer 13) is regarded as the average W concentration. By applying the above-described calculation performed on the W concentration to the Ni and Fe analysis results, the average Ni concentration and the average Fe concentration in the Ni-W alloy layer 13 can be obtained. The component measurement of the plating layer using XPS is performed using an Mg ray source. In the analysis using the Mg ray source, there is no Auger peak overlapping the photoelectron peaks of Ni, W, and Fe. Peaks of 2p orbital for Fe, 2p orbital for Ni, and 4f orbital for W were observed.

### (2. Method for Manufacturing Surface-Treated Steel Sheet 1)

Next, a method for manufacturing the surface-treated steel sheet 1 according to the present embodiment will be described. For example, the manufacturing method according to the present embodiment can suitably obtain the surface-treated steel sheet 1 including the above-described constituent elements.

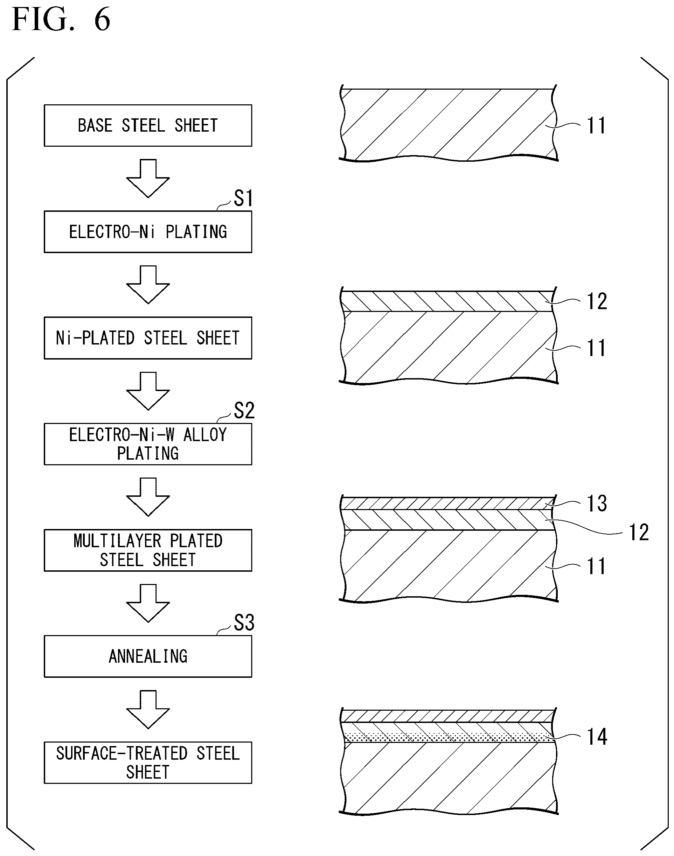

As illustrated in FIG. 6, the method for manufacturing the surface-treated steel sheet 1 according to another aspect of the present invention includes
(S1) electro-Ni plating the base steel sheet 11,
(S2) electro-Ni-W alloy plating the base steel sheet 11, and
(S3) annealing the base steel sheet 11 including the Ni plated layer and the Ni-W alloy layer 13 disposed thereon,
wherein an atmospheric dew point in the annealing is set to -25 to 5°C, a soaking time in the annealing is set to 10 to 180 seconds, and a maximum temperature in the annealing is set to 630 to 860°C.

### (S1 Electro-Ni Plating)

First, the base steel sheet 11 is electro-Ni plated. The plated base metal is the same as the base steel sheet 11 of the surface-treated steel sheet 1 according to the present embodiment described above. As a result, as illustrated in FIG. 6, the Ni-containing layer 12 is provided on the surface of the base steel sheet 11. A plated steel sheet obtained by electro-Ni plating is hereinafter referred to as a Ni-plated steel sheet.

### (S2 Electro-Ni-W Alloy Plating)

Next, the Ni-plated steel sheet is electro-Ni-W alloy plated. As a result, as illustrated in FIG. 6, the Ni-W alloy layer 13 is provided on the surface of the Ni-plated steel sheet. A plated steel sheet obtained by electro-Ni-W alloy plating is hereinafter referred to as a multilayer plated steel sheet.

### (S3 Annealing)

Next, the multilayer plated steel sheet (that is, the base steel sheet 11 including the Ni plated layer and the Ni-W alloy layer 13 disposed thereon) is annealed. As a result, as illustrated in FIG. 6, Fe of the base steel sheet 11 is diffused into part of the plating layer to form the Fe-diffused alloy layer 14. As a result, it is possible to obtain the surface-treated steel sheet 1 including the base steel sheet 11, the Ni-containing layer 12 disposed on the surface of the base steel sheet 11, and the Ni-W alloy layer 13 disposed on the surface of the Ni-containing layer 12, in which the Ni-containing layer 12 includes the Fe-diffused alloy layer 14.

In the annealing, the atmospheric dew point is set to -25 to 5°C. As a result, the W depletion layer 131 can be provided in the Ni-W alloy layer 13.

The present inventors estimate the reason why the annealing performed with the dew point set within the above range forms the W depletion layer 131 in the Ni-W alloy layer 13 as described below. Ni is an element that is less likely to be oxidized than W. Under the above-described conditions, the oxygen concentration is higher than that in the conventional alloying treatment atmosphere, and oxidation easily proceeds. It is presumed that W positioned on the outermost layer at the time before the alloying treatment is oxidized while diffusing over the inside of the plating layer by the alloying treatment in the high dew point atmosphere, thereby forming the W depletion layer 131.

When the present inventors studied various surface-treated steel sheets, W slightly diffused from the Ni-W alloy layer to the Ni-containing layer. The thickness of the Ni-W alloy layer specified from the concentration distribution of W in the depth direction from the surface of the plating layer was substantially the same as the thickness of the Ni-W alloy layer before the alloying treatment.

### (Annealing Time and Annealing Temperature)

Further, in the method for manufacturing the surface-treated steel sheet 1 according to the present embodiment, the annealing time is set to 10 to 180 seconds, and the annealing temperature is set to 630 to 860°C. As the annealing time is longer, alloying progresses, and the thickness of the Fe-diffused alloy layer 14 increases. As the annealing temperature increases, alloying progresses, and the thickness of the Fe-diffused alloy layer 14 increases. Further, according to findings by the present inventors, by setting the annealing time and the annealing time within the above ranges, the W depletion layer 131 can be provided in the Ni-W alloy layer 13. When the annealing time and the annealing temperature are insufficient and the diffusion of the element included in the plating is insufficient, it is estimated that the movement of W becomes insufficient and the W depletion layer is not formed. On the other hand, it is disadvantageous from the viewpoint of productivity and manufacturing cost that the annealing time and the annealing time are too long.

The most basic aspect of the method for manufacturing the surface-treated steel sheet 1 according to the present embodiment has been described above. Next, a more preferable aspect of the method for manufacturing the surface-treated steel sheet 1 according to the present embodiment will be described.

In order to provide the Ni concentration peak 13Ni_{P} within a range from the surface of the Ni-W alloy layer 13 to a depth of 10 nm, it is preferable that the plating layer be partial diffusion plating in which only a part thereof is alloyed. That is, it is preferable to set the annealing time and the annealing temperature so that the Fe-diffused alloy layer 14 is disposed only in the Ni-containing layer 12 or disposed in the entire Ni-containing layer 12 and only part of the Ni-W alloy layer 13. For example, the partial diffusion plating can be obtained by setting the Ni-containing layer to 2 µm, setting the annealing soaking time in annealing to 10 seconds, and setting the annealing temperature in annealing to 750°C.

The reason why the Ni concentration peak 13Ni_{P} is obtained by setting the dew point to be within the above range and using the plating layer as a partial diffusion layer is presumed to be that Ni is less likely to be oxidized than W, and W that is likely to be oxidized is internally oxidized, and Ni that is less likely to be oxidized is externally oxidized.

As described above, the thickness of the Fe-diffused alloy layer 14 is preferably 0.1 to 3.0 µm. In order to obtain such an Fe-diffused alloy layer 14, for example, the soaking time in annealing is preferably 20 seconds, and the annealing temperature in annealing is preferably 810°C.

### (Bath Component)

A Ni plating bath used in the electro-Ni plating has Ni as a main component. For example, the ratio of the Ni element included in the plating bath to all the metal elements included in the plating bath may be 95 mass% or more, 96 mass% or more, or 97 mass% or more. The Ni plating bath may also include Cr, Mo, and the like.

A Ni-W plating bath used in the electro-Ni-W alloy plating has Ni and W as main components. For example, the ratio of the W element included in the plating bath to all the metal elements included in the plating bath may be in a range of 10 to 60 mass%. The ratio of the total of the Ni element and the W element included in the plating bath to all the metal elements included in the plating bath may be 95 mass% or more, 96 mass% or more, or 97 mass% or more. In addition to Ni and W, the Ni-W plating bath may also include Cr, Mo, and the like.

### (Ni Attached amount in Electro-Ni Plating)

**In** the electro-Ni plating, the Ni attached amount is not particularly limited, but may be, for example, 1.5 to 33 g/m². As a result, the attached amount of Ni included in the Ni-containing layer 12 can be set to 1.5 to 33 g/m². The more preferable attached amount of Ni in the electro-Ni plating may be the same as the more preferable Ni attached amount in the Ni-containing layer 12 of the surface-treated steel sheet 1 according to the present embodiment described above. The Ni attached amount can be controlled through the components of the Ni plating bath and the energization amount.

### (Total Ni Attached amount in Electro-Ni Plating and Electro-Ni-W Alloy Plating)

The total Ni attached amount in the electro-Ni plating and the electro-Ni-W alloy plating is not particularly limited, and may be, for example, 1.8 to 35.6 g/m². As a result, the total attached amount of Ni included in the Ni-containing layer 12 and the Ni-W alloy layer 13 can be set to 1.8 to 35.6 g/m². The more preferable total attached amount of Ni included in the Ni-containing layer 12 and the Ni-W alloy layer 13 may be the same as the more preferable total Ni attached amount in the Ni-containing layer 12 and the Ni-W alloy layer 13 of the surface-treated steel sheet 1 according to the present embodiment described above. The total Ni attached amount can be controlled through the components of the Ni plating bath and the Ni-W plating bath and the energization amount.

Various aspects described with respect to the surface-treated steel sheet 1 according to the present embodiment can be applied to the method for manufacturing the surface-treated steel sheet according to the present embodiment. For example, as a matter of course, a preferable aspect of the base steel sheet 11 in the surface-treated steel sheet 1 according to the present embodiment can be applied to the method for manufacturing the surface-treated steel sheet according to the present embodiment. Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

The base steel sheet was electro-Ni plated, electro-Ni-W alloy plated, and annealed to prepare various surface-treated steel sheets. The components of the base steel sheet are indicated in Table 1. The components of the plating bath used in the electro-Ni-W alloy plating are indicated in Table 2. The manufacture conditions of the surface-treated steel sheet are indicated in Table 3. The evaluation results of the surface-treated steel sheets are indicated in Tables 4 and 5. The conditions not described in the tables are the same in all the examples, and the contents thereof are described below.

The components of the plating bath for electro-Ni plating were NiSO₄ · 6H₂O: 240 g/L, NiCl₂ · 6H₂O: 70 g/L, and H₃BO₃: 45 g/L. The pH of the plating bath for electro-Ni plating was 4, and the temperature was 50°C. The current density in the electro-Ni plating was 30 A/dm². The plating attached amount in the electro-Ni plating was controlled through the energization time.

The Ni ion source in the electro-Ni-W alloy plating was NiSO₄ · 6H₂O, and the W ion source was Na₂WO₄ · 2H₂O. The composition (W content) of the Ni-W alloy plating was adjusted by changing the Ni ion concentration and the W ion concentration ratio. In in order to stabilize W ions in the bath, 0.5 mol/L of citric acid was added to the plating bath for electro-Ni-W alloy plating. The pH of the plating bath for electro-Ni-W alloy plating was 6, and the temperature was 50°C. The current density in the electro-Ni-W alloy plating was 20 A/dm². The plating attached amount in the electro-Ni-W alloy plating was controlled through the energization time.

The thickness of the Fe-diffused alloy layer and the thickness of the Ni-containing layer were measured by the GDS method described above. The measurement results are indicated in Table 4. The thickness of the Ni-W alloy layer was also measured by the GDS method described above, and it was confirmed that the thickness of the Ni-W alloy layer was more than 10 nm in all the examples. Accordingly, the description of the thickness of the Ni-W alloy layer is omitted in Table 5.

The presence or absence of the W depletion layer, the measurement of the proportion W_{B}/W_{P} of the W concentration W_{B} at the W concentration bottom to the W concentration W_{P} at the W concentration peak, and the measurement of the proportion Ni_{P}/Ni_{B} of the Ni concentration Ni_{P} at the Ni concentration peak to the Ni concentration Ni_{B} at the Ni concentration bottom were performed according to the above-described method using XPS. The measurement results are indicated in Table 4.

The average W concentration in the Ni-W alloy layer was measured by the above-described method using XPS. The measurement results are indicated in Table 4.

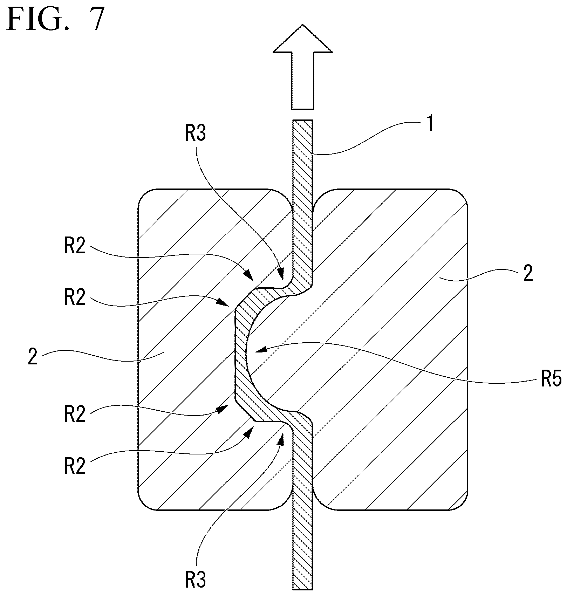

The workability of the plating was evaluated by a draw bead test. A die 2 for testing was a convex-concave die 2 illustrated in FIG. 7. The material of the die 2 was SKD11. The lubricating oil was noxrust550HN. The sheet thickness of the steel sheet was 0.4 mm, and the width was 30 mm. The drawing speed was 200 mm/min, the sliding distance was 100 mm, and the pressing load was 600 kgf. After the draw bead, the surface-treated steel sheet 1 was subjected to alkaline degreasing to remove the lubricating oil. Then, a corrosion resistance evaluation test piece of 20 mm × 50 mm was cut out from the surface-treated steel sheet 1 with the draw bead. A surface slid on the convex side of the die 2 was used as a corrosion resistance evaluation surface. The test piece was subjected to a constant temperature and humidity test (60°C, 85%RH). After the constant temperature and humidity test, the area fraction of red rust generated on the corrosion resistance evaluation surface was measured and is shown in Table 5. Since corrosion resistance correlates with the state of cracks in the plating layer, workability can be evaluated using the red rust generation area fraction. A sample having a red rust generation area fraction of 10% or less was determined to be the surface-treated steel sheet 1 having excellent workability, and is shown as "Pass" in Table 5. A sample having a red rust generation area fraction of more than 10% is shown as "Fail" in Table 5.

Electrolytic solution resistance of the plating was evaluated by electrochemical measurement in an atmosphere non-exposed environment in a glove box. The temperature of the measurement environment was 25°C, the dew point was -80°C or less, and the oxygen concentration was 0.7 ppm or less. In the electrolytic solution, the volume proportion of ethylene carbonate (EC) and ethyl methyl carbonate (EMC) was set to 1 : 3 (v/v%). 2 mass% of vinylene carbonate (VC) and 1 mol/L of LiPF₆ were added to the electrolytic solution. The reference electrode and the counter electrode were Li thin lines of 1 mm φ. In the electrochemical measurement, first, open-circuit voltage (OCV) was performed for five minutes. Then, linear sweep voltammetry (LSV) was performed up to 4.5 V vs. Li. The sweep rate in the LSV was 20 mV/s. The anode current at 3.8 V vs. Li was recorded and is shown in Table 5. The smaller the anode current, the higher the electrolytic solution resistance. The evaluation criteria were as described below (unit: × 10⁻⁶ A/cm²).
S: Anode current of 0.50 or less
A: Anode current of more than 0.50 and 1.00 or less
B: Anode current of more than 1.00 and 10.00 or less
C: Anode current of more than 10.00

The above-described evaluation method and evaluation criteria are stricter than the evaluation criteria required for a normal battery can. Accordingly, even a sample classified as "C" in the evaluation criteria described above may be available as an inner surface material of a battery can. A sample classified as B or more in the evaluation criteria described above is excellent as an inner surface material of a battery can.

**[Table 1]**

| Steel sheet type | Steel sheet component |
|---|---|
| Steel sheet 1 | C: 0.057, Si: 0.004, Mn: 0.29, P: 0.014, S: 0.007, Al: 0.050, Cu: 0.034, Ni: 0.021, Remainder: including iron and impurities |
| Steel sheet 2 | C: 0.0012, Si: less than 0.01, Mn: 0.16, P: 0.013, S: 0.006, Al: 0.029, Cu: 0.027, Ni: 0.022, Ti: 0.020, Remainder: including iron and impurities |

**[Table 2]**

| Ni-W plating bath type | Ni ion concentration mol/L | W ion concentration mol/L |
|---|---|---|
| Bath 1 | 0.2 | 0.10 |
| Bath 2 | 0.2 | 0.15 |
| Bath 3 | 0.2 | 0.20 |
| Bath 4 | 0.2 | 0.25 |
| Bath 5 | 0.2 | 0.30 |

**[Table 3]**

| Example number | Steel sheet Ni-W plating type bath type | Ni attached amount of undercoat Ni plating (g/m²) | Total Ni attached amount (g/m²) | Dew point of annealing atmosphere (°C) | Maximum temperature in annealing (°C) | Soaking time (sec.) |
|---|---|---|---|---|---|---|
| Example 1 | Steel sheet 1 Bath 1 | 20 | 24 | -10 | 720 | 30 |
| Example 2 | Steel sheet 1 Bath 1 | 20 | 25 | -10 | 720 | 30 |
| Example 3 | Steel sheet 1 Bath 1 | 20 | 26 | -10 | 720 | 30 |
| Example 4 | Steel sheet 1 Bath 2 | 20 | 23 | -10 | 720 | 30 |
| Example 5 | Steel sheet 1 Bath 2 | 20 | 24 | -10 | 720 | 30 |
| Example 6 | Steel sheet 1 Bath 2 | 20 | 25 | -10 | 720 | 30 |
| Example 7 | Steel sheet 1 Bath 3 | 20 | 23 | -10 | 720 | 30 |
| Example 8 | Steel sheet 1 Bath 3 | 20 | 24 | -10 | 720 | 30 |
| Example 9 | Steel sheet 1 Bath 3 | 20 | 25 | -10 | 720 | 30 |
| Example 10 | Steel sheet 1 Bath 4 | 20 | 22 | -10 | 720 | 30 |
| Example 11 | Steel sheet 1 Bath 4 | 20 | 23 | -10 | 720 | 30 |
| Example 12 | Steel sheet 1 Bath 4 | 20 | 24 | -10 | 720 | 30 |
| Example 13 | Steel sheet 1 Bath 5 | 20 | 22 | -10 | 720 | 30 |
| Example 14 | Steel sheet 1 Bath 5 | 20 | 23 | -10 | 720 | 30 |
| Example 15 | Steel sheet 1 Bath 5 | 20 | 24 | -10 | 720 | 30 |
| Example 16 | Steel sheet 2 Bath 3 | 20 | 23 | -10 | 850 | 20 |
| Example 17 | Steel sheet 2 Bath 3 | 20 | 23 | -10 | 850 | 20 |
| Example 18 | Steel sheet 2 Bath 3 | 20 | 23 | -10 | 850 | 20 |
| Example 19 | Steel sheet 1 Bath 3 | 20 | 23 | 5 | 720 | 30 |
| Example 20 | Steel sheet 1 Bath 3 | 20 | 23 | 0 | 720 | 30 |
| Example 21 | Steel sheet 1 Bath 3 | 20 | 23 | -20 | 720 | 30 |
| Example 22 | Steel sheet 1 Bath 3 | 20 | 23 | -25 | 720 | 30 |
| Example 23 | Steel sheet 1 Bath 3 | 20 | 23 | -30 | 720 | 30 |
| Example 24 | Steel sheet 1 Bath 3 | 20 | 23 | -10 | 600 | 30 |
| Example 25 | Steel sheet 1 Bath 3 | 20 | 23 | -10 | 650 | 30 |
| Example 26 | Steel sheet 1 Bath 3 | 20 | 23 | -10 | 750 | 30 |
| Example 27 | Steel sheet 1 Bath 3 | 20 | 23 | -10 | 800 | 30 |
| Example 28 | Steel sheet 1 Bath 3 | 20 | 23 | -10 | 720 | 5 |
| Example 29 | Steel sheet 1 Bath 3 | 20 | 23 | -10 | 720 | 10 |
| Example 30 | Steel sheet 1 Bath 3 | 20 | 23 | -10 | 720 | 60 |
| Example 31 | Steel sheet 1 Bath 3 | 20 | 23 | -10 | 720 | 120 |
| Example 32 | Steel sheet 1 Bath 3 | 20 | 23 | -10 | 720 | 180 |
| Example 33 | Steel sheet 1 Bath 3 | 1.5 | 1.8 | -10 | 720 | 30 |
| Example 34 | Steel sheet 1 Bath 3 | 10 | 13 | -10 | 720 | 30 |
| Example 35 | Steel sheet 1 Bath 3 | 30 | 33 | -10 | 720 | 30 |
| Example 36 | Steel sheet 1 Bath 3 | 33 | 35.5 | -10 | 720 | 30 |
| Example 37 | Steel sheet 1 Bath 3 | 20 | 23 | 5 | 800 | 25 |
| Example 38 | Steel sheet 1 Bath 3 | 20 | 23 | -25 | 800 | 25 |

**[Table 4]**

| Example number | Presence/absence of W depletion layer | W_{B}/Wₚ | Ni_{P}/Ni_{B} | Thickness of Ni-containing layer (µm) | Thickness of Fe-diffused alloy layer (µm) | Average W concentration of Ni-W alloy layer (mass%) |
|---|---|---|---|---|---|---|
| Example 1 | Present | 0.42 | 1.15 | 2.7 | 0.7 | 10% |
| Example 2 | Present | 0.40 | 1.17 | 2.8 | 0.7 | 10% |
| Example 3 | Present | 0.38 | 1.18 | 2.9 | 0.7 | 10% |
| Example 4 | Present | 0.32 | 1.23 | 2.6 | 0.7 | 20% |
| Example 5 | Present | 0.30 | 1.24 | 2.7 | 0.7 | 20% |
| Example 6 | Present | 0.29 | 1.25 | 2.8 | 0.7 | 20% |
| Example 7 | Present | 0.21 | 1.31 | 2.6 | 0.7 | 30% |
| Example 8 | Present | 0.20 | 1.31 | 2.7 | 0.7 | 30% |
| Example 9 | Present | 0.19 | 1.33 | 2.8 | 0.7 | 30% |
| Example 10 | Present | 0.18 | 1.33 | 2.5 | 0.7 | 35% |
| Example 11 | Present | 0.15 | 1.36 | 2.6 | 0.7 | 35% |
| Example 12 | Present | 0.14 | 1.37 | 2.7 | 0.7 | 35% |
| Example 13 | Present | 0.12 | 1.38 | 2.5 | 0.7 | 40% |
| Example 14 | Present | 0.10 | 1.40 | 2.6 | 0.7 | 40% |
| Example 15 | Present | 0.08 | 1.41 | 2.7 | 0.7 | 40% |
| Example 16 | Present | 0.22 | 1.30 | 2.6 | 1.0 | 30% |
| Example 17 | Present | 0.20 | 1.32 | 2.7 | 1.0 | 30% |
| Example 18 | Present | 0.18 | 1.33 | 2.8 | 1.0 | 30% |
| Example 19 | Present | 0.10 | 1.40 | 2.6 | 0.7 | 30% |
| Example 20 | Present | 0.15 | 1.36 | 2.6 | 0.7 | 30% |
| Example 21 | Present | 0.40 | 1.17 | 2.6 | 0.7 | 30% |
| Example 22 | Present | 0.50 | 1.10 | 2.6 | 0.7 | 30% |
| Example 23 | Absent | - | - | 2.6 | 0.7 | 30% |
| Example 24 | Absent | - | - | 2.6 | 0.3 | 30% |
| Example 25 | Present | 0.35 | 1.20 | 2.6 | 0.5 | 30% |
| Example 26 | Present | 0.18 | 1.33 | 2.6 | 0.8 | 30% |
| Example 27 | Present | 0.12 | 1.38 | 2.6 | 0.9 | 30% |
| Example 28 | Absent | - | - | 2.6 | 0.5 | 30% |
| Example 29 | Present | 0.24 | 1.29 | 2.6 | 0.6 | 30% |
| Example 30 | Present | 0.17 | 1.34 | 2.6 | 0.8 | 30% |
| Example 31 | Present | 0.11 | 1.39 | 2.6 | 0.8 | 30% |
| Example 32 | Present | 0.07 | 1.42 | 2.6 | 0.9 | 30% |
| Example 33 | Present | 0.25 | 1.28 | 0.21 | 0.7 | 30% |
| Example 34 | Present | 0.22 | 1.30 | 1.48 | 0.7 | 30% |
| Example 35 | Present | 0.20 | 1.32 | 3.8 | 0.7 | 30% |
| Example 36 | Present | 0.18 | 1.34 | 4.0 | 0.7 | 30% |
| Example 37 | Present | 0.00 | 1.47 | 2.7 | 0.7 | 30% |
| Example 38 | Present | 0.60 | 1.01 | 4.5 | 0.08 | 48% |

**[Table 5]**

| Example number | Workability evaluation result | Red rust generation area fraction (%) | Metal elution amount anode current (× 10⁻⁶ A/cm²) | Electrolytic solution resistance |
|---|---|---|---|---|
| Example 1 | Pass | 8.1 | 0.13 | S |
| Example 2 | Pass | 7.6 | 0.14 | S |
| Example 3 | Pass | 7.1 | 0.15 | S |
| Example 4 | Pass | 5.7 | 0.18 | S |
| Example 5 | Pass | 5.2 | 0.19 | S |
| Example 6 | Pass | 5.0 | 0.20 | S |
| Example 7 | Pass | 3.1 | 0.25 | S |
| Example 8 | Pass | 2.9 | 0.30 | S |
| Example 9 | Pass | 2.6 | 0.40 | S |
| Example 10 | Pass | 2.4 | 0.50 | S |
| Example 11 | Pass | 1.7 | 0.60 | A |
| Example 12 | Pass | 1.4 | 0.70 | A |
| Example 13 | Pass | 1.0 | 0.80 | A |
| Example 14 | Pass | 0.5 | 1.20 | B |
| Example 15 | Pass | 0 | 2.00 | B |
| Example 16 | Pass | 3.3 | 0.24 | S |
| Example 17 | Pass | 2.9 | 0.30 | S |
| Example 18 | Pass | 2.4 | 0.50 | S |
| Example 19 | Pass | 0.5 | 1.00 | A |
| Example 20 | Pass | 1.7 | 0.60 | A |
| Example 21 | Pass | 7.6 | 0.13 | B |
| Example 22 | Pass | 10 | 0.09 | B |
| Example 23 | Fail | 20 | 12.00 | C |
| Example 24 | Fail | 25 | 14.00 | C |
| Example 25 | Pass | 6.4 | 0.17 | S |
| Example 26 | Pass | 2.4 | 0.45 | S |
| Example 27 | Pass | 1.0 | 0.75 | A |
| Example 28 | Fail | 30 | 11.00 | C |
| Example 29 | Pass | 3.8 | 0.22 | S |
| Example 30 | Pass | 2.1 | 0.48 | S |
| Example 31 | Pass | 0.7 | 0.90 | A |
| Example 32 | Pass | 0 | 3.00 | B |
| Example 33 | Pass | 4.0 | 0.22 | S |
| Example 34 | Pass | 3.3 | 0.21 | S |
| Example 35 | Pass | 2.9 | 0.32 | S |
| Example 36 | Pass | 2.4 | 0.45 | S |
| Example 37 | Pass | 4.0 | 13.00 | C |
| Example 38 | Pass | 2.2 | 0.08 | S |

The test pieces of Examples 23, 24, and 28 did not include the W depletion layer in a range from the surface of the Ni-W alloy layer to a depth of 10 nm. The red rust generation area fraction in these test pieces far exceeded 10%, which is a pass/fail determination criterion, and it was determined that workability was poor. In Example 23, the dew point of the annealing atmosphere was below an appropriate range. In Example 24, the maximum temperature at the time of annealing was below an appropriate range. In Example 28, the soaking time was below an appropriate range. In Examples 23, 24, and 28, it was presumed that the W depletion layer was not obtained because the manufacturing conditions were inappropriate.

On the other hand, the test pieces obtained by an appropriate manufacturing method included the W depletion layer in a range from the surface of the Ni-W alloy layer to a depth of 10 nm. The red rust generation area fraction in these test pieces was 10% or less, and it was determined that these test pieces had good workability.

It was confirmed that when the proportion W_{B}/W_{P} of the W concentration W_{B} at the W concentration bottom to the W concentration W_{P} at the W concentration peak was high, the electrolytic solution resistance of the surface-treated steel sheet was further improved. In the test piece of Example 37, W_{B}/W_{P} was zero, and the electrolytic solution resistance was determined to be C. On the other hand, the electrolytic solution resistance of the example in which W_{B}/W_{P} was 0.05 or more was even better than that of Example 37. As W_{B}/W_{P} was higher, the electrolytic solution resistance tended to be further enhanced.

### REFERENCE SIGNS LIST

- 1: Surface-treated steel sheet
- 11: Base steel sheet
- 12: Ni-containing layer
- 13: Ni-W alloy layer
- 131: W depletion layer
- 13W_{B}: W concentration bottom
- 13W_{P}: W concentration peak
- 13Ni_{B}: Ni concentration bottom
- 13Ni_{P}: Ni concentration peak
- 14: Fe-diffused alloy layer
- 2: Die
- W_{P}: W concentration at W concentration peak
- W_{B}: W concentration at W concentration bottom
- Nip: Ni concentration at Ni concentration peak
- Ni_{B}: Ni concentration at Ni concentration bottom

## Claims

1. A surface-treated steel sheet, comprising:
a base steel sheet;
a Ni-containing layer disposed on a surface of the base steel sheet; and
a Ni-W alloy layer disposed on a surface of the Ni-containing layer,
wherein
the Ni-containing layer includes an Fe-diffused alloy layer,
the Ni-W alloy layer has a thickness of more than 10 nm, and
the surface-treated steel sheet includes a W depletion layer in a range from a surface of the Ni-W alloy layer to a depth of 10 nm.

2. The surface-treated steel sheet according to claim 1, wherein
the surface-treated steel sheet has a W concentration bottom in the range from the surface of the Ni-W alloy layer to a depth of 10 nm,
the surface-treated steel sheet has a W concentration peak in a place deeper than the W concentration bottom, and
a proportion W_{B}/W_{P} of a W concentration W_{B} at the W concentration bottom to a W concentration W_{P} at the W concentration peak is 0.5 or less.

3. The surface-treated steel sheet according to claim 1 or 2, wherein
the Fe-diffused alloy layer is disposed only in the Ni-containing layer or disposed only in the entire Ni-containing layer and part of the Ni-W alloy layer,
the surface-treated steel sheet has a Ni concentration peak in the range from the surface of the Ni-W alloy layer to a depth of 10 nm,
the surface-treated steel sheet has a Ni concentration bottom in a place deeper than the Ni concentration peak in the Ni-W alloy layer, and
a proportion Ni_{P}/Ni_{B} of a Ni concentration Ni_{P} at the Ni concentration peak to a Ni concentration Ni_{B} at the Ni concentration bottom is 1.1 or more.

4. The surface-treated steel sheet according to claim 1 or 2, wherein
the Ni-containing layer has a thickness of 0.2 to 4.0 µm.

5. The surface-treated steel sheet according to claim 1 or 2, wherein
an attached amount of Ni included in the Ni-containing layer and the Ni-W alloy layer is 1.8 to 35.6 g/m².

6. The surface-treated steel sheet according to claim 1 or 2, wherein
the Fe-diffused alloy layer has a thickness of 0.1 to 3.0 µm.

7. The surface-treated steel sheet according to claim 1 or 2, wherein
an average W concentration in the Ni-W alloy layer is 10 to 45 mass%.

8. The surface-treated steel sheet according to claim 2, wherein
the proportion W_{B}/W_{P} of the W concentration W_{B} at the W concentration bottom to the W concentration W_{P} at the W concentration peak is 0.05 or more.

9. The surface-treated steel sheet according to claim 1 or 2, wherein
only part of the Ni-containing layer is the Fe-diffused alloy layer.

10. The surface-treated steel sheet according to claim 1 or 2, wherein
the Ni-containing layer is entirely the Fe-diffused alloy layer, and part of the Ni-W alloy layer is the Fe-diffused alloy layer.

11. A method for manufacturing a surface-treated steel sheet comprising:
electro-Ni plating a base steel sheet;
electro-Ni-W alloy plating the base steel sheet including an Ni plated layer; and
annealing the base steel sheet including the Ni plated layer and an Ni-W alloy layer disposed thereon,
wherein
an atmospheric dew point in the annealing is set to -25 to 5°C,
a soaking time in the annealing is set to 10 to 180 seconds, and
a maximum temperature in the annealing is set to 630 to 860°C.

12. The method for manufacturing the surface-treated steel sheet according to claim 11, wherein
in the electro-Ni plating, an Ni attached amount is set to 1.5 to 33 g/m².

13. The method for manufacturing the surface-treated steel sheet according to claim 11 or 12, wherein
in the electro-Ni plating and the electro-Ni-W alloy plating, a total Ni attached amount is set to 1.8 to 35.6 g/m².
